# EUROPÄISCHE PATENTSCHRIFT

(11) **EP 0 462 425 B1**
(45) Veröffentlichungstag und Bekanntmachung des Hinweises auf die Patenterteilung: **29.12.1993**
(21) Anmeldenummer: 91108649.4
(22) Anmeldetag: 28.05.1991
(51) Int. Cl.: G01B 21/02

(54) **Gekapselte Messeinrichtung**
Sealed measuring device
Dispositif de mesure blindé

(30) Priorität: 02.06.1990 DE 4017858
(43) Veröffentlichungstag der Anmeldung: 27.12.1991
(73) Patentinhaber: Dr. Johannes Heidenhain GmbH, D-83292 Traunreut (DE)
(72) Erfinder: Ernst, Alfons, Dipl.-Ing., W-8225 Traunreut (DE)

(56) Entgegenhaltungen:
- DE-A- 3 415 164
- DE-C- 3 623 353
- US-A- 4 117 439

## Beschreibung

Die Erfindung bezieht sich auf eine gekapselte Meßeinrichtung, insbesondere Längen- oder Winkelmeßeinrichtung gemäß dem Oberbegriff des Anspruches 1.

Bei gekapselten Meßeinrichtungen ist es erforderlich, im Gehäuse in Meßrichtung einen Schlitz vorzusehen, durch den ein Mitnehmer ins Innere des Gehäuses hineinragen kann, um die dort befindliche Baueinheit zum Abtasten der Meßteilung mit dem außerhalb des Gehäuses angebrachten Montagefuß zu verbinden. Bei Relativbewegungen von beispielsweise Bett und Schlitten einer Maschine wird die Maschinenbewegung auf die Meßteilung bzw. die Abtast-Baueinheit übertragen, wobei der Mitnehmer innerhalb des Schlitzes in Bewegungsrichtung relativ verfahren und die Bewegung gemessen wird.

Zum Schutze der hochempfindlichen Meßteilung muß der Schlitz im Gehäuse möglichst gut verschlossen sein, und nur jeweils im Bereich des Mitnehmers soll eine Durchtrittsmöglichkeit zum Inneren des Gehäuses gegeben sein.

Eine derartige Meßeinrichtung zeigt die DE-PS 28 46 768, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Ferner ist aus der DE-PS 34 09 514 eine gekapselte Meßeinrichtung bekannt, bei der durch eine labyrinthartige Profilierung des Querschnittes der Dichtelemente ein besonders guter Schutz gegen Medien erzielt wird, die gesprüht oder gespritzt angewendet werden. Durch die angepaßte Formgebung des Mitnehmers bleibt dieser Effekt auch beim örtlichen Durchgriff des Mitnehmers durch die Dichtelemente erhalten.

Eine derartig gestaltete Längenmeßeinrichtung ist auch der JP 61-243 309 A zu entnehmen.

In der DE-PS 36 23 353 ist eine weitere Meßeinrichtung beschrieben, deren Vorteile darin liegen, daß aufgrund der nach Art einer Verzahnung ineinandergreifenden Zinken der kammartigen Abdeckelemente Fremdkörper und Flüssigkeiten aber auch Sprühnebel und dergleichen nicht durch das Labyrinth nach innen in den Hohlraum der Meßeinrichtung eindringen können.

Die nach der Lehre dieser Patente gebauten Meßeinrichtungen weisen hervorragende Dichtungseigenschaften auf, aber die ineinander verzahnten Zinken der Dichtelemente erhöhen die Reibung bei der Bewegung des Mitnehmers in Meßrichtung.

Die immer weiter zu erhöhenden Bearbeitungsgeschwindigkeiten bei Werkzeugmaschinen erfordern aber möglichst reibungsarm zusammenwirkende Bauteile.

Der Erfindung liegt die Aufgabe zugrunde, eine gegenüber Umgebungseinflüssen hinreichend geschützte Meßeinrichtung zu schaffen, bei der die Reibungskräfte zwischen den zueinander relativ beweglichen Bauelementen extrem reduziert sind.

Diese Aufgabe wird mit einer gekapselten Meßeinrichtung gemäß Anspruch 1 gelöst.

Durch die in den Unteransprüchen aufgeführten Merkmale wird die Meßvorrichtung in vorteilhafter Weise ausgestaltet.

Die besonderen Vorteile der erfindungsgemäßen Meßeinrichtung liegen in der Reibungs- und Verschleißfreiheit und ihrer Eignung für hohe Verfahrgeschwindigkeit der damit ausgestatteten Maschine.

Mit Hilfe der Zeichnungen soll anhand von Ausführungsbeispielen die Erfindung noch näher erläutert werden.

Es zeigt
- Figur 1: einen schematischen Querschnitt durch eine Längenmeßeinrichtung;
- Figur 2: einen schematischen Querschnitt durch eine Variante der Längenmeßeinrichtung gemäß Figur 1 und
- Figur 3: eine weitere Meßeinrichtung.

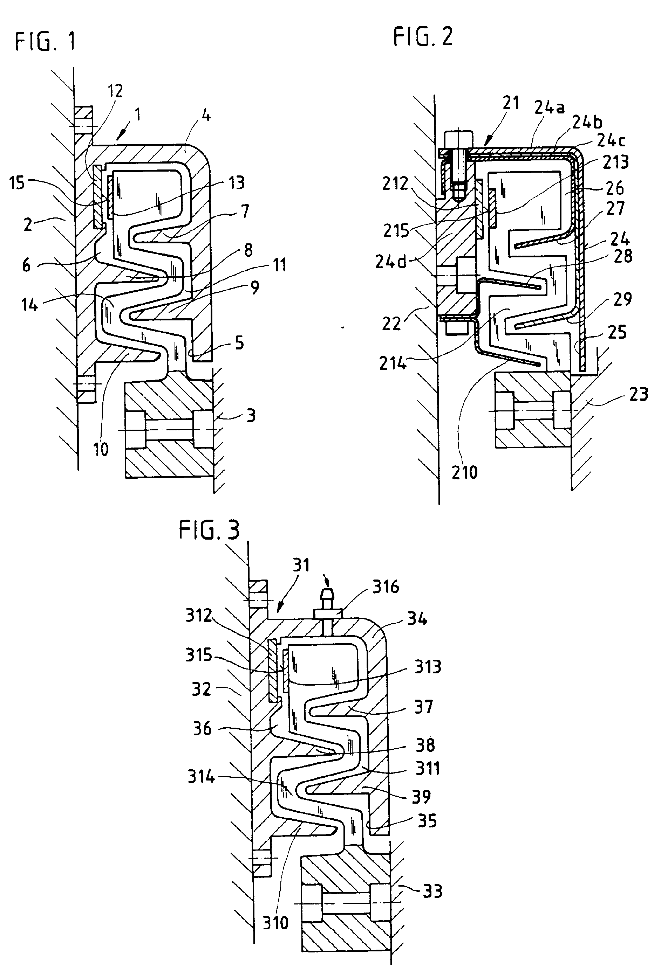

Eine in Figur 1 geschnitten dargestellte Längenmeßeinrichtung 1 ist am Schlitten 2 einer nicht näher bezeichneten Werkzeugmaschine befestigt. Der Schlitten 2 ist in bekannter und daher hier nicht gezeigter Weise am Bett 3 der Maschine geführt. Die Meßeinrichtung 1 soll hier nur mit den wesentlichsten Elementen gezeigt werden und besteht aus einem an den Stirnseiten verschlossenen Hohlprofil 4, das in Längsrichtung einen durchgehenden Schlitz 5 aufweist und im folgenden als Gehäuse 4 bezeichnet wird.

Der Schlitz 5 ermöglicht den Zugang zum Innenraum 6 des Gehäuses 4. Im Innenraum 6 des Gehäuses 4 befinden sich mehrere Zinken 7, 8, 9, 10 die kammartig aber berührungsfrei im Eingriff miteinander stehen. Das bedeutet, daß das Gehäuse 4 einen labyrinthartig profilierten Querschnitt aufweist. Das Labyrinth wird dabei von einem Spalt 11 gebildet, welcher durch das berührungslose Kämmen der Zinken 7, 8, 9, 10 miteinander entsteht.

Im Gehäuse 4 ist ferner eine Maßverkörperung 12 angeordnet, die mit einer zur Messung dienenden Abtast-Baueinheit 13 die Messung der Relativbewegungen von Bett 3 und Schlitten 2 ermöglicht. Die Abtast-Baueinheit 13 befindet sich starr an einem Mitnehmer 14, über den sie mit dem Bett 3 der Maschine in bekannter Weise verbunden ist.

Der Mitnehmer 14 weist einen mäanderförmigen Querschnitt auf, dessen Verlauf dem durch die Zinken 7, 8, 9, 10 gebildeten Spalt 11 entspricht.

Die Dichtwirkung beruht darauf, daß das Störmedium einen möglichst langen Weg bis zur Abtaststelle 15 zurücklegen muß. Dies wird durch die Umwege im Labyrinth des Spaltes 11 erreicht und es ist ersichtlich, daß die Qualität der Abdichtung mit der Anzahl der Zinken 7, 8, 9, 10,... steigt. Die Qualität der Abdichtung steigt auch mit der Genauigkeit, mit der der mäanderförmige Mitnehmer 14 an den Verlauf des Spaltes 11 angepaßt ist.

Durch die Maßnahme, daß in der gezeigten Anbaulage der Längenmeßeinrichtung 1 alle Flächen im Innenraum 6 nach unten geneigt sind, wird die Bildung eines Flüssigkeitssumpfes vermieden, falls doch Spuren von Flüssigkeit ins Innere der Längenmeßeinrichtung 1 eindringen sollten.

Ferner kann Kondensat abfließen und durch die Verbindung zur Außenluft auch wieder verdampfen.

In Figur 2 ist eine Variante gezeigt, bei der ein Gehäuse 24 aus einem Paket mit mehreren Lagen 24a, 24b, 24c gebildet wird. Diese Lagen können aus Blechstreifen bestehen. Einzelne Lagen 24b, 24c münden in Zinken 29, 27, die analog zum Ausführungsbeispiel aus Figur 1 berührungslos mit Zinken 28, 210 kämmen. Die Zinken 28, 210 sind ebenfalls aus Blechstreifen gebildet, die an einem Sockel 24d befestigt sind. Sämtliche Blechstreifen 24a, 24b, 24c, 28, 210 sind durch nicht näher bezeichneten Schrauben mit dem Sockel 24d verbunden.

Alle weiteren Elemente entsprechen funktional denen aus Figur 1, weshalb sie mit korrespondierenden Bezugszeichen versehen sind, denen lediglich zur Unterscheidung die Figurenbezifferung als Indexziffer vorangestellt ist.

Gleiches gilt für das Ausführungsbeispiel gemäß Figur 3. Hier ist zusätzlich ein Anschlußstutzen 316 vorgesehen, durch den Luft ins Innere des Gehäuses 34 zugeführt werden kann. Durch diese Maßnahme wird eine laminare Luftströmung erzeugt, so daß kein Störmedium gegen diese Luftströmung in den Schlitz 35 eindringen kann.

Die Gehäuse 4 und 34 gemäß der Figuren 1 und 3 können aus extrudiertem Aluminium bestehen.

Bei den gezeigten Ausführungsbeispielen wird die Abtast-Baueinheit 13, 213, 313 berührungslos über die Maßverkörperung 12, 212, 312 geführt, so daß auch hier keine Reibung und kein Verschleiß auftreten kann. Diese Maßnahme ist allerdings nicht zwingend erforderlich, denn es können auch - wie beim Stand der Technik üblich - Präzisionskugellager zur Führung der Abtast-Baueinheit verwendet werden.

## Patentansprüche

1. Gekapselte Meßeinrichtung, insbesondere Längen- oder Winkelmeßeinrichtung, zur Messung der Lage zweier zueinander beweglicher Objekte (2,3;22,23;32,33), deren mit einem der zu messenden Objekte (2,22,32) verbundenes Gehäuse (4,24,34) an zumindest einer Seite einen in Bewegungsrichtung des beweglichen Objektes verlaufenden Spalt (11,311) aufweist, durch den ein mit dem anderen Objekt (3,23,33) verbundener Mitnehmer (14,214,314) örtlich hindurchgreift, der seinerseits mit einer im Gehäuse untergebrachten, zur Messung dienenden Abtast-Baueinheit (13,213,313) verbunden ist, wobei das Gehäuse (4,24,34) einen labyrinthartig profilierten Querschnitt aufweist, dem die Form des Mitnehmers (14,214,314) mäanderförmig derart angepaßt ist, daß er den Querschnitt des Gehäuses durchgreift, dadurch gekennzeichnet, daß der Spalt (11, 311) frei von Dichtelementen ist, so daß der Durchgriff des Mitnehmers (14, 214, 314) berührungsfrei erfolgt.

2. Gekapselte Meßeinrichtung nach Anspruch 1, dadurch gekennzeichnet, daß das Gehäuse (4, 34) aus extrudiertem Leichtmetall besteht.

3. Gekapselte Meßeinrichtung nach Anspruch 1, dadurch gekennzeichnet, daß das Gehäuse (24) aus einem Paket mit mehreren Lagen (24a, 24b, 24c, 24d, 28, 210) besteht, die miteinander fest verbunden sind.

4. Gekapselte Meßeinrichtung nach Anspruch 1, dadurch gekennzeichnet, daß Innenflächen des Gehäuses (4, 24, 34) und Oberflächen des Mitnehmers (14, 214, 314) geneigt sind.

5. Gekapselte Meßeinrichtung nach Anspruch 1, dadurch gekennzeichnet, daß im Gehäuse (34) ein Anschlußstutzen (316) für Druckluft vorgesehen ist.

6. Gekapselte Meßeinrichtung nach Anspruch 1, dadurch gekennzeichnet, daß die Abtast-Baueinheit (13, 213, 313) mit dem Mitnehmer (14, 214, 314) starr verbunden ist.

## Claims

1. Encapsulated measuring device, in particular a length or angle measuring device, for measuring the position of two relatively movable objects (2, 3; 22, 23; 32, 33), of which the housing (4, 24, 34) connected to one of the objects (2, 22, 32) to be measured comprises on at least one side a gap (11, 311) which extends in the direction of movement of the movable object and through which extends locally a driver (14, 214, 314) which is connected to the other object (3, 23, 33) and which in turn is connected to a scanning unit (13, 213, 313) accommodated in the housing and used for measurement, wherein the housing (4, 24, 34) has a cross-section of labyrinthine profile to which the shape of the driver (14, 214, 314) is adapted in meander fashion in such a way that it passes through the cross-section of the housing, characterised in that the gap (11, 311) is free from sealing elements, so that the driver (14, 214, 314) passes through without contact.

2. Encapsulated measuring device according to claim 1, characterised in that the housing (4, 34) is made of extruded light metal.

3. Encapsulated measuring device according to claim 1, characterised in that the housing (24) consists of an assembly with several layers (24a, 24b, 24c, 24d, 28, 210) which are rigidly connected to each other.

4. Encapsulated measuring device according to claim 1, characterised in that inner faces of the housing (4, 24, 34) and surfaces of the driver (14, 214, 314) are inclined.

5. Encapsulated measuring device according to claim 1, characterised in that in the housing (34) is provided a connecting socket (316) for compressed air.

6. Encapsulated measuring device according to claim 1, characterised in that the scanning unit (13, 213, 313) is rigidly connected to the driver (14, 214, 314).

## Revendications

1. Dispositif de mesure étanche, notamment dispositif de mesure de longueurs ou d'angles, destiné à la mesure de la position de deux objets 2, 3; 22, 23; 32, 33) mobiles l'un par rapport à l'autre, dispositif dont le boîtier (4, 24, 34) qui est lié à l'un des objets à mesurer présente, sur un côté au moins, une fente (11, 311) qui s'étend dans la direction de déplacement de l'objet mobile et dans laquelle pénètre localement un entraîneur (14, 214, 314) qui est lié à l'autre objet (3, 23, 33) et d'autre part à une unité de lecture (13, 213, 313) servant à la mesure, logée dans le boîtier, le boîtier (4, 24, 34) présentant une section en forme de labyrinthe et l'entraîneur (14, 214, 314) ayant une forme en méandres adaptée de manière telle que celui-ci pénètre dans le boîtier, caractérisé par le fait que la fente (11, 311) ne comporte pas d'éléments d'étanchéité de sorte que l'entraîneur (14, 214, 314) y pénètre sans contact.

2. Dispositif de mesure étanche selon la revendication 1, caractérisé par le fait que le boîtier (4, 34) est en alliage léger extrudé.

3. Dispositif de mesure étanche selon la revendication 1, caractérisé par le fait que le boîtier (24) est formé d'un ensemble à plusieurs couches (24a, 24b, 24c, 24d, 28, 210) qui sont reliées solidement entre elles.

4. Dispositif de mesure étanche selon la revendication 1, caractérisé par le fait que les faces intérieures du boîtier (4, 24, 34) et les surfaces de l'entraîneur (14, 214, 314) sont inclinées.

5. Dispositif de mesure étanche selon la revendication 1, caractérisé par le fait qu'il est prévu, sur le boîtier (34) un raccord (316) pour de l'air comprimé.

6. Dispositif de mesure étanche selon la revendication 1, caractérisé par le fait que l'unité de lecture (13, 213, 313) est liée rigidement à l'entraîneur (14, 214, 314).
